# EUROPÄISCHE PATENTSCHRIFT

(11) **EP 1 116 305 B1**
(45) Veröffentlichungstag und Bekanntmachung des Hinweises auf die Patenterteilung: **13.08.2003**
(21) Anmeldenummer: 99955805.9
(22) Anmeldetag: 22.09.1999
(51) Int. Cl.: H01R 13/627, G02B 6/38, G02B 6/42

(54) **LÖSBARE VERBINDUNGSANORDNUNG**
REMOVABLE CONNECTING SYSTEM
DISPOSITIF DE CONNEXION AMOVIBLE

(30) Priorität: 23.09.1998 DE 19843627
(43) Veröffentlichungstag der Anmeldung: 18.07.2001
(73) Patentinhaber: Infineon Technologies AG, 81669 München (DE)
(72) Erfinder: STOCKHAUS, Andreas, D-14199 Berlin (DE); SCHULZ, Klaus, D-12309 Berlin (DE)
(74) Vertreter: Müller, Wolfram Hubertus, Dipl.-Phys.
(86) Internationale Anmeldenummer: DE9903089
(87) Internationale Veröffentlichungsnummer: WO00017967

(56) Entgegenhaltungen:
- EP-A- 0 401 937
- DE-A- 19 601 949
- US-A- 4 915 643
- US-A- 4 993 967
- US-A- 5 288 243
- US-A- 5 403 199

## Beschreibung

Die Erfindung liegt auf dem Gebiet der Montage elektronischer Bauteile oder Module, insbesondere elektrooptischer Module (sog. Transceiver). Bei der Montage derartiger Module auf Trägern, insbesondere mit Leiterbahnen und Anschlußkontakten versehenen Leiterplatten, besteht anwenderseitig zunehmend die Forderung nach verhältnismäßig frei und uneingeschränkt auf der Leiterplatte plazierbaren und kontaktierbaren Modulen. Insbesondere werden Modulbauformen und geeignete Verbindungsanordnungen gefordert, die ein einfaches horizontales Einstecken der Module in geeignete Halterungen erlauben, die neben der elektrischen Kontaktierung des Moduls auch eine ausreichend zugfeste mechanische Fixierung gewährleisten.

Aus der US-PS 5,734,558 geht ein optoelektronisches Bauteil mit einer zugeordneten Halterung hervor, die auf einer Oberseite einer Leiterplatte angeordnet ist. Das Bauteil und die Halterung sind mit kooperierenden Fixierungseinrichtungen versehen. Dabei weist das Bauteilgehäuse an beiden Schmalseiten zur optischen Anschlußseite des Bauteils freie federnde Rastarme auf. Außenseitig sind die Rastarme mit Rastnasen versehen, die in entsprechende Ausnehmungen der Halterung einrasten, wenn das Bauteil parallel zur Oberfläche des Trägers bis in eine Endposition (Verbindungsposition) eingeführt ist. In dieser Position ist das Bauteil mit der Halterung mechanisch verbunden, wobei gleichzeitig eine an der der optischen Anschlußseite gegenüberliegenden Seite des Bauteils angeordnete Steckerleiste mit einer halterungsseitigen Federkontaktleiste ein elektrischer Anschluß gegeben ist.

Das bekannte Bauteil erfordert zur Montage und zur Demontage - bei der die freien Enden der Rastarme manuell aufeinander zubewegt werden müssen, bis die Rastnasen von den Ausnehmungen der Halterung freigegeben sind - einen erheblichen seitlichen Zugangsraum. Da ein ausreichender Materialquerschnitt auch in der der Höhe der Schmalseite für die Rastarme vorgesehen werden muß und auch eine ausreichende Höhe der Betätigungsflächen (Endbereiche der Rastarme) erforderlich ist, kann die Bauhöhe des Bauteils nicht unterhalb diesbezüglich ausreichender Dimensionen verringert werden.

Der Erfindung liegt die Aufgabe zugrunde, eine lösbare Verbindungsanordnung zu schaffen, die selbst eine äußerst niedrige Bauhöhe bei hoher Benutzerfreundlichkeit aufweist und außerdem einer Verminderung der Bauteilhöhe nicht entgegensteht.

Diese Aufgabe wird erfindungsgemäß gelöst durch eine lösbare Verbindungsanordnung mit einem Bauteil und mit einer Halterung, die auf einer Oberseite eines Trägers angeordnet ist, wobei das Bauteil und die Halterung mit kooperierenden Führungen ausgestattet sind, die bei Bildung der Verbindung eine in Montagerichtung geführte Bewegung des Bauteils relativ zu der Halterung und parallel zur Oberseite des Trägers bis in eine Verbindungsposition bewirken, das Bauteil an seiner dem Träger zugewandten Unterseite ein Verriegelungselement aufweist, die Halterung eine sich entgegen der Montagerichtung unterhalb des Bauteils erstreckende federnde Zunge mit einem Verriegelungspartner am freien Zungenende aufweist, der in der Verbindungsposition mit dem Verriegelungselement des Bauteils verrastet, und ein Betätigungsbereich des freien Zungenendes in der Verbindungsposition von der Bauteilstirnseite her zugänglich ist.

Ein wesentlicher Vorteil der Erfindung besteht in der Bereitstellung eines von unten an das Bauteil anfedernden Verriegelungmechanismus, der eine äußerst geringe Bauhöhe von durchaus weniger als 1,2mm aufweist. Dennoch kann der Verriegelungspartner eine erhebliche Zugbelastung in horizontaler Richtung abfangen. Dies ermöglicht beispielsweise die sichere mechanische Fixierung und Verbindungsanordnung von elektrooptischen Modulen, an deren einen Stirnbereich zur optischen Ankopplung Lichtwellenleiterstecker angesteckt sein können, auf die erhebliche Zugbelastungen (von typischerweise 40 bis 60 N) ausgeübt werden können. Ein weiterer wesentlicher Vorteil der Erfindung besteht in der Zugänglichkeit des Betätigungsbereichs von der vorzugsweise als optischer Ankopplungsseite ausgebildeten Stirnseite des Bauteil aus. Dadurch kann das Bauteil bzw. die Halterung unmittelbar neben benachbarten Komponenten angeordnet werden, ohne daß zur Montage bzw. Demontage seitliche Zugängsräume neben dem Bauteil vorgesehen werden müssen. Ein weiterer Vorteil ist darin zu sehen, daß die unter dem Bauteil angeordnete federnde Zunge eine zu Betätigung ausreichende Breite aufweisen kann, ohne die eingangs geschilderten Einschränkungen auf die Bauteilhöhe auszuüben.

Eine bevorzugte Weiterbildung der Erfindung sieht vor, daß die federnde Zunge aus Metall besteht und Montageflächen aufweist, die auf der Oberseite des Trägers kontaktiert sind. Ein wesentlicher Vorteil der leitenden, insbesondere in Form eines einteiligen Metall-Stanzteiles ausgebildeten, Zunge besteht darin, daß die Verbindung bei äußerst geringen Bauteilquerschnitten dennoch sehr hohe Zugbelastungen aufnehmen kann. Außerdem ist die Metallzunge bei Betätigungsüberbelastung sehr robust und neigt eher zu (reversible) Verformungen als zum Bruch. Bei zu starken Zugkräften würde eher das bauteilseitige Verriegelungselement nachgeben, dagegen die auf der Leiterplatte montierte und nur aufwendig austauschbare Halterung intakt bleiben. Ein weiterer erheblicher Vorteil besteht darin, daß die leitende Zunge zur elektrischen Bauteil-Abschirmung dienen kann, indem sie im verriegelten Zustand mit entsprechenden Abschirmblechen des Bauteils elektrisch verbunden und ihrerseits auf Abschirmpotential gelegt ist. Dazu ist die Zunge besonders vorteilhaft auch über ihre Montageflächen auf der Oberseite des Trägers kontaktiert.

Eine fertigungstechnisch bevorzugte Ausgestaltung der erfindungsgemäßen Verbindungsanordnung besteht darin, daß das andere Ende der Zunge von einem Halteblock der Halterung aufgenommen ist, der zumindest auch Teile der halterungsseitigen Führungen aufweist.

Eine besonders anwenderfreundliche Gestaltung der erfindungsgemäßen Verbindungsanordnung ist nach einer bevorzugten Weiterbildung der Erfindung dadurch realisiert, daß der Betätigungsbereich des freien Zungenendes zur Oberseite des Trägers hin abgebogen ist und in der Verbindungsposition über die Bauteilstirnseite hervorragt.

Sowohl hinsichtlich der Montage als auch insbesondere der Demontage ist es besonders bevorzugt, wenn das Bauteil entgegen einer Federvorspannung in die verbundene Endposition gebracht ist. Bevorzugt kann dabei die Federvorspannung von einer halterungsseitig angeordneten Feder erzeugt sein. Dies ist herstellungstechnisch und montagetechnisch besonders günstig und läßt hinsichtlich der Gehäuseform des Bauteils eine große Variantenvielfalt zu. Die Federvorspannung ist dabei bevorzugt so gewählt, daß sie sich beim Einführen des Bauteils in die Halterung erst im letzten Teil des Montageweges bemerkbar macht. Dazu kann in Montagerichtung gesehen am entfernten Ende der Halterung eine Druckfeder angeordnet sein, die kurz vor dem Erreichen der Endposition mit dem Bauteil bzw. mit einer Endfläche des Bauteilgehäuses in Kontakt kommt. Damit kann der Anwender in einfacher und komfortabler Art dafür sensibilisiert werden, daß sich das Bauteil unmittelbar vor dem Erreichen der Endposition befindet. Die Federvorspannung hat insbesondere beim Demontieren des Bauteil erhebliche Vorteile, weil nach dem Entriegeln der kooperierenden Verriegelungspartner das Bauteil entgegen der Montagerichtung unter Entspannung der Feder zumindest ein Stück ausgeworfen wird. Dadurch ist einerseits zuverlässig die Entriegelung des Bauteils und andererseits eine erleichterte Greifmöglichkeit des Bauteils realisiert.

Die Erfindung wird nachfolgend anhand einer Zeichnung beispielhaft weiter erläutert; es zeigen:
Figur 1 eine Halterung
Figur 2 eine erfindungsgemäße Verbindungsanordnung mit teilweiser Darstellung eines Bauteils und der Halterung gemäß Figur 1 und
Figuren 3a und 3b die Herstellung bzw. die Lösung einer Verbindung zwischen dem Bauteil und der Halterung.

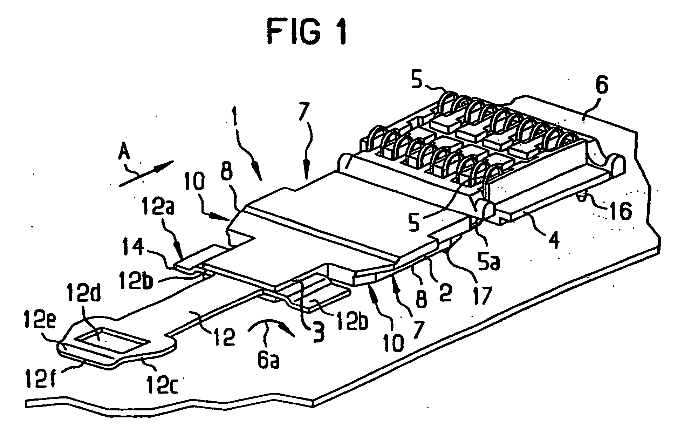

Figur 1 zeigt eine Halterung 1, die einen Halteblock 2 umfaßt. Den in Montagerichtung A gesehen vorderen Bereich'ist eine integrale Aufnahme 3 ausgebildet; im hinteren Bereich schließt sich an den Halteblock 2 ein elektrischer Mehrfachverbinder 4 mit einer Vielzahl von elektrischen Kontakten 5 an. Die elektrischen Kontakte 5 sind federnd ausgebildet und weisen jeweils ein Ende 5a auf, das zur Oberflächenlötmontage ausgebildet ist. Auf diese Weise kann der Mehrfachverbinder 4 mit seinen Kontaktenden 5a mit zugeordneten, nicht näher dargestellten Anschlußlötkontaktflächen auf der Oberseite 6a einer Leiterplatte 6 verbunden werden. Die Kontakte 5 dienen ihrereseits zur elektrischen Kontaktierung von an der Unterseite eines mit der Halterung zu verbindenden Bauteils angeordneten elektrischen Kontakten.

Die Halterung 2 weist an beiden Schmalseiten 7 Hinterschneidungen 8 auf, die mit entsprechenden schienenartigen Umfalzungen des Bauteilgehäuses in noch näher erläuterter Weise als Führungen 10 zusammenwirken. Die Führungen 10 sorgen dafür, daß ein in Montagerichtung A eingeführtes Bauteil unter Bildung der Verbindung eine definierte horizontale Bewegung relativ zu der Halterung 2, mit dem Anschlußteil 4 und einer federnden metallischen Zunge 12 ausführt.

Die vorzugsweise als Kunststoff-Formteil im Spritzguß hergestellte Halterung 2 hält mit ihrer integralen Aufnahme 3 im vorderen Bereich 14 zur ein hinteres Ende 12a der Zunge 12. Zwei halterungsnahe Kontaktflächen der Zunge 12 erstrecken sich seitlich und bilden Montageflächen 12b die mit auf der Oberseite 6a des Trägers 6 ausgebildeten und nicht näher dargestellten Massekontaktanschlüßen verlötet sind. Damit kann die Zunge zur elektrischen Abschirmung eines entsprechend geschirmten Bauteils dienen. Durch die Lötverbindungen und Positionierstifte 16, 17 ist die Halterung in vorbestimmter Position auf dem Träger 6 befestigt. Am federnden freien Zungenende 12c ist eine im wesentlichen rechteckige Ausnehmung 12d vorgesehen, die in nachfolgend noch erläuterter Weise einen Verriegelungspartner für ein bauteilseitiges Verriegelungselement bildet. Am freien Zungenende 12c ist ferner ein Betätigungsbereich 12e ausgebildet, der eine nach unten in Richtung auf dem Träger 6 abgebogene Betätigungsfläche 12f umfaßt.

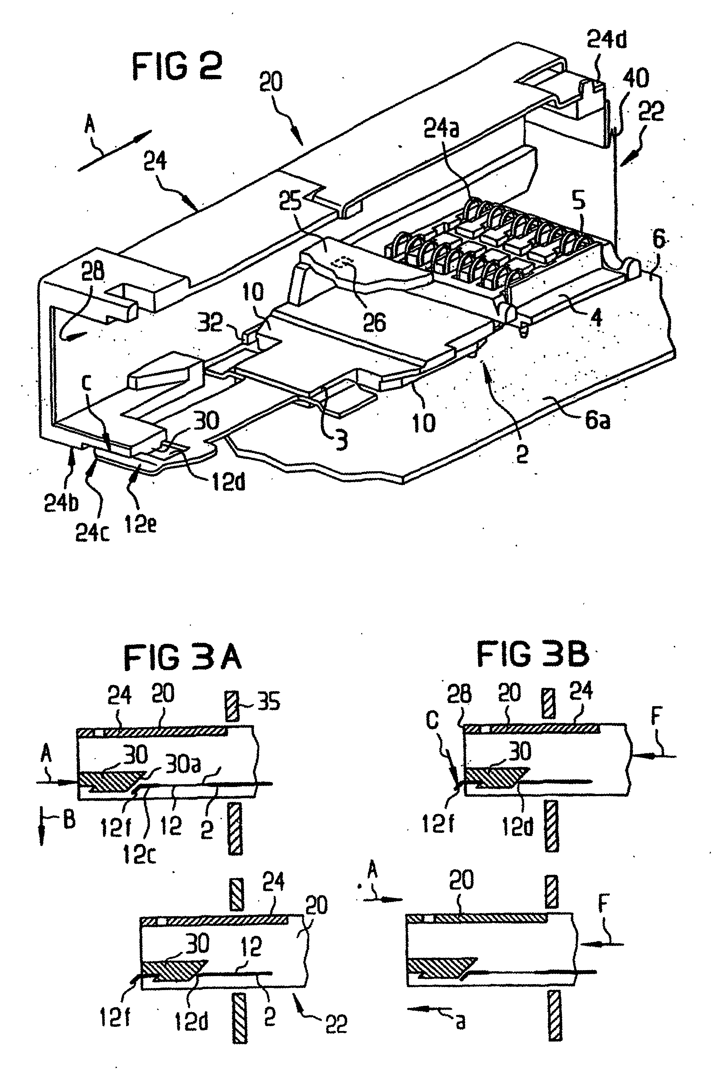

Figur 2 zeigt in stark vereinfachter Darstellung unter Weglassung inbesondere der elektrooptischen und elektronischen Komponenten ein Bauteil 20, das mit der in Figur 1 beschriebenen Halterung 2 vollständig verbunden ist und dabei eine verbundene Endposition 22 (Verbindungsposition) erreicht hat. Das Bauteil 20 umfaßt ein Gehäuse 24, das eine auf Ablageflächen 24a gelagerte nur ganz schematisch angedeutete Leiterplatte 25 enthält, die elektronische Komponenten 26 des Bauteils 20 trägt. Nicht dargestellte Anschlußkontakte der Leiterplatte 25 sind in der dargestellten Endposition 22 mit zugeordneten Kontakten 5 des Mehrfachverbinders 4 elektrisch verbunden, so daß Signal- und Versorgungsleitungen zu dem Bauteil realisiert sind. Das in Montagerichtung A gesehen vordere stirnseitige Ende 28 des Gehäuses 24 ist zur Aufnahme elektrooptischer Steckverbinder ausgebildet, die in an sich bekannter und daher nicht näher gezeigter Weise auf elektrooptische Wandler des Bauteils 20 ausgerichtet sind.

Das Bauteil 20 bzw. das Gehäuse 24 weist an seiner dem Träger 6 zugewandten Unterseite 24a ein Verriegelungselement auf, das als eine sich wegerstreckende Rastnase 30 ausgebildet ist. Das Gehäuse 24 weist ferner Führungen 32 (Umfalzungen) in Form von inneren Schienen auf, die mit den Führungen 10 der Halterung 2 zusammenwirken und das Bauteil während des Verbindungsvorganges führen und in einer definierten vertikalen Relation zur Halterung halten. In der dargestellten Verbindungsposition 22 ist das Verriegelungselement 30 in den Verriegelungspartner 12d eingerastet. Bei Zugbelastungen beispielsweise auf die nicht dargestellten optischen Steckverbinder wird das Bauteil 1 durch den Verriegelungsmechanismus zuverlässig in seiner Position gehalten. Der Betätigungsbereich 12e der Zunge 12 ist unterhalb des Gehäuses 24 im stirnseitigen Bereich 28 durch eine Gehäuseausnehmung 24c zugänglich. Bevorzugt kann der Bereich 12e geringfügig über die Bauteilstirnseite 28 hervorragen. Wie im rückwärtigen, in Montagerichtung A gesehen hinteren Bereich des Halters 2 nur schematisch angedeutet, kann eine Druckfeder 40 vorgesehen sein, die sich in der Endposition unter Federvorspannung an dem rückwärtigen Ende 24d des Gehäuses 24 abstützt.

Der Verriegelungsvorgang bzw. Entriegelungsvorgang bei der Montage bzw. Demontage des Bauteils wird nachfolgend im Zusammenhang mit den Figuren 3a und 3b unter schematischer Darstellung der beteiligten Elemente weiter erläutert.
Bei der Montage wird das Bauteil 20 mit seinem Gehäuse 24 in Montagerichtung A durch eine Rückwand 35 eines Aufnahmegestells eingeschoben, aus dem die Halterung 2 teilweise hervorsteht. Insbesondere steht die Zunge 12 mit ihrem freien Zungenende 12c hervor. Wie im oberen Teil der Figur 3a gezeigt, gelangt schließlich eine Anlaufschräge 30a der Nase 30 (Figur 2) in Kontakt mit der Betätigungsfläche 12f der Zunge 12. Dadurch wird die Zunge vertikal nach unten in Pfeilrichtung B ausgelenkt bis die Nase 30 als Verriegelungselement des Bauteils 1 vollständig in den Verriegelungspartner 12d in Form der Öffnung in der Zunge 12 eingedrungen ist und damit (wie in Figur 3a im unteren Teil schematisch dargestellt) die Verbindungsposition 22 erreicht ist.

Zur Demontage und Entnahme des Bauelementes 20 wird die über die Stirnseite 28 hervorstehende Betätigungsfläche 12f in Pfeilrichtung C soweit nach unten in Richtung auf den Träger 6 (Figur 2) ausgelenkt, daß das Verriegelungselement 30 von dem Verriegelungspartner 12d freigegeben ist. Durch die auf dem rückwärtigen Bereich 24d des Gehäuse 24 wirkendes Kraft F der Feder 40 (Figur 2) wird bei der Entriegelung das Bauteil 20 entgegen der Montagerichtung A zumindest einen Teilweg aausgeworfen. Dadurch ist einerseits die Entriegelung des Bauteils eindeutig erkennbar und andererseits der vorderer Bereich des Bauteils leicht greifbar.

## Patentansprüche

1. Lösbare Verbindungsanordnung mit einem Bauteil und mit einer Halterung, die auf einer Oberseite eines Trägers angeordnet ist, wobei das Bauteil (20) und die Halterung (1) mit kooperierenden Führungen (10, 32) ausgestattet sind, die bei Bildung der Verbindung eine in Montagerichtung (A) geführte Bewegung des Bauteils (20) relativ zu der Halterung (1) und parallel zur Oberseite (6a) des Trägers bis in eine Verbindungsposition (22) bewirken,
**dadurch gekennzeichnet,daß**
- das Bauteil (20) an seiner dem Träger (6) zugewandten Unterseite (24b) ein Verriegelungselement (30) aufweist,
- die Halterung (1) eine sich entgegen der Montagerichtung (A) unterhalb des Bauteils (20) erstreckende federnde Zunge (12) mit einem Verriegelungspartner (12d) am freien Zungenende (12c) aufweist, der in der Verbindungsposition (22) mit dem Verriegelungselement (30) des Bauteils (20) verrastet, und
- ein Betätigungsbereich (12e) des freien Zungenendes (12c) in der Verbindungsposition (22) von der Bauteilstirnseite (28) her zugänglich ist.

2. Verbindungsanordnung nach Anspruch 1,
**dadurch gekennzeichnet,daß**
die federnde Zunge (12) aus Metall besteht und Montageflächen (12b) aufweist, die auf der Oberseite (6a) des Trägers (6) kontaktiert sind.

3. Verbindungsanordnung nach Anspruch 1 oder 2,
**dadurch gekennzeichnet,daß**
das andere Ende der Zunge (12) von einem Halteblock (2) der Halterung (1) aufgenommen ist, der zumindest auch Teile (8) der halterungsseitigen Führungen (10) aufweist.

4. Verbindungsanordnung nach Anspruch 1, 2 oder 3,
**dadurch gekennzeichnet,daß**
der Betätigungsbereich (12e) des freien Zungenendes (12c) zur Oberseite (6a) des Trägers (6) hin abgebogen ist und in der Verbindungsposition (22) über die Bauteilstirnseite (28) hervorragt.

5. Verbindungsanordnung nach einem der vorangehenden Ansprüche,
**dadurch gekennzeichnet,daß**
das Bauteil (20) entgegen einer Federvorspannung (F) in die Verbindungsposition (22) gebracht ist.

6. Verbindungsanordnung nach Anspruch 5,
**dadurch gekennzeichnet,daß**
die Federvorspannung (F) von einer halterungsseitig angeordneten Feder (40) erzeugt ist.

7. Verbindungsanordnung nach einem der vorangehenden Ansprüche,
**dadurch gekennzeichnet,daß**
das Verriegelungselement eine in Verbindungsposition (22) zur Oberseite (6a) des Trägers (6) hin weisende Nase (30) ist und daß der Verriegelungspartner eine Öffnung (12d) im freien Zungenende (12c) ist.

## Claims

1. Detachable connecting arrangement having a component and having a mount which is arranged on a top face of a carrier, in which the component (20) and the mount (1) are equipped with interacting guides (10, 32) which, when the connection is formed, bring about a guided movement of the component (20), in the mounting direction (A), relative to the mount (1), and parallel to the top face (6a) of the carrier, into a connecting position (22),
**characterized in that**
- the component (20) has a locking element (30) on its underside (24b), which is directed towards the carrier (6),
- the mount (1) has a resilient tongue (12) which extends, counter to the mounting direction (A), beneath the component (20) and has a locking partner (12d) at the free tongue end (12c), said locking partner, in the connecting position (22), latching with the locking element (30) of the component (20), and
- an actuating region (12e) of the free tongue end (12c) is accessible from the component end face (28) in the connecting position (22).

2. Connecting arrangement according to Claim 1, **characterized in that** the resilient tongue (12) consists of metal and has mounting surfaces (12b) which are made contact with on the top face (6a) of the carrier (6).

3. Connecting arrangement according to Claim 1 or 2, **characterized in that** the other end of the tongue (12) is accommodated by a retaining block (2) of the mount (1), said retaining block also having at least parts (8) of the guides (10) of the mount.

4. Connecting arrangement according to Claim 1, 2 or 3, **characterized in that** the actuating region (12e) of the free tongue end (12c) is bent down in the direction of the top face (6a) of the carrier (6) and, in the connecting position (22), projects beyond the component end face (28).

5. Connecting arrangement according to one of the preceding claims, **characterized in that** the component (20) is moved into the connecting position (22) counter to spring preloading (F).

6. Connecting arrangement according to Claim 5, **characterized in that** the spring preloading (F) is produced by a spring (40) arranged on the mount.

7. Connecting arrangement according to one of the preceding claims, **characterized in that** the locking element is a tab (30) which, in the connecting position (22), is oriented in the direction of the top face (6a) of the carrier (6), and **in that** the locking partner is an opening (12d) in the free tongue end (12c).

## Revendications

1. Dispositif amovible de connexion comprenant un élément et une fixation, qui est disposé sur une face supérieure d'un support, l'élément (20) et la fixation (1) étant munis de guidages (10, 32) qui coopèrent et qui, lors de la formation de la connexion, provoque un déplacement guidé dans le sens (A) de montage de l'élément (20) par rapport à la fixation (1) et parallèlement à la face (6a) supérieure du support jusqu'à une position (22) de connexion,
**caractérisé en ce que**
- l'élément (20) a, sur sa face (24b) inférieure toumée vers le support (6) un élément (30) de verrouillage,
- la fixation (1) a une languette (12) élastique s'étendant dans le sens opposé au sens (A) du montage en dessous de l'élément (20) et ayant un partenaire (12d) de verrouillage à l'extrémité (12c) libre de la languette qui, en la position (22) de connexion, s'encliquette avec l'élément (30) de verrouillage de l'élément (20), et
- une partie (12e) d'actionnement de l'extrémité (12c) libre de la languette est accessible dans la position (22) de connexion par le côté (28) frontal de l'élément.

2. Dispositif de connexion suivant la revendication 1, **caractérisé en ce que** la languette (12) élastique est en métal et a des surfaces (12b) de montage qui sont mises en contact sur la face (6a) supérieure du support (6).

3. Dispositif de connexion suivant la revendication 1 ou 2, **caractérisé en ce que** l'autre extrémité de la languette (12) est reçue par un bloc (2) de maintien de la fixation (1), qui a au moins aussi des parties (8) des guidages (10) se trouvant du côté de la fixation.

4. Dispositif de connexion suivant la revendication 1, 2 ou 3,
**caractérisé en ce que** la partie (12e) d'actionnement de l'extrémité (12c) libre de la languette est coudée vers la face (6a) supérieure du support (6) et dépasse en la position (22) de connexion de la face (28) frontale de l'élément.

5. Dispositif de connexion suivant l'une des revendications précédentes, **caractérisé en ce que** l'élément (20) est mis en la position (22) de connexion à l'encontre d'une précontrainte (F) d'un ressort.

6. Dispositif de connexion suivant la revendication 5, **caractérisé en ce que** la précontrainte (F) d'un ressort est produite par un ressort (40) disposé du côté de la fixation.

7. Dispositif de connexion suivant l'une des revendications précédentes, **caractérisé en ce que** l'élément de verrouillage est un bec (30) pointant en la position (22) de connexion vers la face (6a) supérieure du support (6) et **en ce que** le partenaire de verrouillage est une ouverture (12d) ménagée dans l'extrémité (12c) libre de la languette.
